# EUROPEAN PATENT APPLICATION

(11) **EP 2 045 755 A2**
(43) Date of publication of application: **08.04.2009**
(21) Application number: 08017196.0
(22) Date of filing: 30.09.2008
(51) Int. Cl.: G06F 21/22

(54) **Information processing apparatus and method thereof, program, and storage medium**

(30) Priority: 05.10.2007 JP 2007262734; 29.08.2008 JP 2008222793
(71) Applicant: Canon Kabushiki Kaisha, Tokyo (JP)
(72) Inventor: Oishi, Kazuomi c/o Canon Kabushiki Kaisha, Tokyo (JP)
(74) Representative: Weser, Thilo

(57) **Abstract**

An information processing apparatus (300) includes determining means (S102) configured to determine a target instruction to be modified to a camouflaged instruction among instructions contained in a processing target program, camouflaged instruction generating means (S104) configured to generate the camouflaged instruction corresponding to the target instruction, restore command generating means (S108) configured to generate a restore command for restoring the generated camouflaged instruction to the corresponding target instruction, and means (S109) configured to modify the target instruction contained in the processing target program with the generated camouflaged instruction and add the restore command to the program, wherein the restore command performs the restoration by referencing a memory storing an output value of a processing command contained in the processing target program and identifying the position of the target instruction in the program or the target instruction based on the referenced value.

## Description

### BACKGROUND OF THE INVENTION

### Field of the Invention

The present invention relates to an information processing apparatus and a method thereof, a program, and a storage medium, and relates particularly to a technique for making analysis or alteration of a program difficult.

### Description of the Related Art

For the purpose of copyright protection or protection of encryption keys, there is a demand for a technique for creating a program that is difficult to analyze or alter. Conventionally, therefore, there have been known techniques for encrypting a program and techniques for obfuscating a program. Yuichiro Kanzaki, Akito Monden, Masahide Nakamura, Ken-ichi Matsumoto, "A Software Protection Method Based on Instruction Camouflage", the Journal of IEICE (Denshi Joho Tsushin Gakkaishi), Vol. J87-A, No. 6, pp. 755-767, June 2004 (hereinafter referred to as Kanzaki) describes features of these techniques and proposes, as a technique different from these techniques, a configuration in which a program that performs a self-modifying process is created.

However, although Kanzaki discloses a configuration in which a true command code of a program is camouflaged using the self-modifying process, the degree of protection against analysis cannot be considered sufficient. In other words, although the configuration of Kanzaki renders a program more resistant to static analysis, in which analysis is performed without executing the program, than the conventional techniques, there is a problem in that the program can be analyzed when sufficient static analysis is performed.

### SUMMARY OF THE INVENTION

The present invention was conceived in consideration of the foregoing problems, and it provides a technique that is capable of making analysis or alteration of a program even more difficult.

The present invention in its first aspect provides an information apparatus as specified in claims 1 to 4.

The present invention in its second aspect provides a program as specified in claims 5 to 8.

The present invention in its third aspect provides an information processing method as specified in claim 9.

The present invention in its fourth aspect provides a computer-readable storage medium as specified in claim 10.

Further features of the present invention will become apparent from the following description of exemplary embodiments (with reference to the attached drawings).

### BRIEF DESCRIPTION OF THE DRAWINGS

FIG. 1 is a flowchart showing the flow of processing based on a self-modifying process addition program.

FIG. 2 shows an example of a C source program.

FIG. 3 is a block diagram showing the internal configuration of a computer apparatus.

FIG. 4A and 4B show an example of an assembly program.

FIG. 5 shows an example of an assembly program as a result of adding a self-modifying process.

FIG. 6 shows another example of a C source program.

FIG. 7 shows the results of executing code in FIG. 2.

FIG. 8 shows the results of executing code in FIG. 6.

FIG. 9 is a diagram showing a flowchart example.

FIG. 10 is a diagram showing an example of a possible flowchart.

FIG. 11 is a diagram showing another example of a possible flowchart.

FIG. 12 is a diagram showing another example of a possible flowchart.

FIG. 13A and 13B show an example of an assembly program.

FIG. 14 shows an example of an assembly program to which a self-modifying process has been added.

### DESCRIPTION OF THE EMBODIMENTS

Hereinafter, embodiments of the present invention will be described in detail with reference to the attached drawings. However, it is to be understood that constituent elements as set forth in the present embodiments are given for illustrative purpose only and the scope of the present invention is not construed as being limited by these constituent elements. Moreover, not all of the combinations of features described in the present embodiments are essential for means of solving the problems of the present invention.

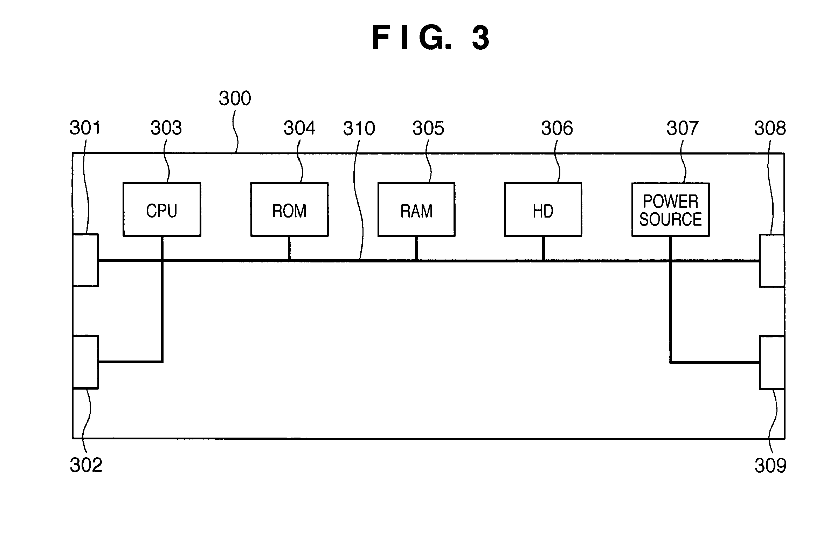

First Embodiment
Configuration of Computer Apparatus
The internal configuration of a computer apparatus (an image processing apparatus) of this embodiment will be described with reference to FIG. 3. FIG. 3 is a block diagram showing the internal configuration of the computer apparatus. This internal configuration is common to all of the embodiments in the present specification.

As shown in FIG. 3, the computer apparatus 300 includes a network interface 301, an external medium read/write device 302, a CPU 303, a ROM 304, a RAM 305, and a hard disk 306. Moreover, the computer apparatus 300 includes a power source 307, a direction input device interface 308, a monitor interface 309, a bus 310, and the like.

The network interface 301 is a communication interface for communication with an external device and is realized by, for example, a LAN interface, a wireless LAN interface, or the like. The external medium read/write device 302 is a device for reading/writing data from/to an external medium. Examples of the external medium from/to which data is read/written by the external medium read/write device 302 include a flexible disk, a CD-R, a DVD, a USB, and the like.

The CPU 303 is a central processing unit that controls the overall operation of the computer apparatus 300. The ROM 304 is a read-only memory and stores a basic program, basic data, and the like. The RAM 305 is a writable memory and is used as a work area for operations performed by the CPU 303.

The hard disk (hereinafter referred to as HD) 306 is a large-capacity external storage apparatus and stores, for example, data before and after operations. The power source 307 supplies electric power to the computer apparatus 300. The direction input device interface 308 is an interface with a direction input device, and the user inputs directions and commands via the direction input device. Examples of the direction input device connected to the direction input device interface 308 include a keyboard/pointing device and the like.

The monitor interface 309 is an interface with a monitor and outputs a screen for displaying the operation results or the like to a monitor connected thereto. The bus 310 provides connections between the components of the computer apparatus 300 and transmits signals.

It should be noted that the computer apparatus 300 is realized by a personal computer (PC), a workstation (WS), a personal digital assistant (PDA), or the like.

The processing content (the procedure) that will be described below is realized as a program (software) or modules (hardware). For example, when the processing content is realized as a program, the program is stored in the ROM 304 or the HD 306, and the stored program is read into the CPU 303. Then, the CPU 303 performs processing by reading data recorded on the HD 306 and writing data to the HD 306 via the bus 310 while using the RAM 305 as a space (a work area) for calculation as necessary.

When the processing content is realized as modules, an entity that executes the operation equivalent to the operation of the program is realized as, for example, an LSI and incorporated in the computer apparatus 300. In this case, a direction is issued from the CPU 303 of the apparatus to the modules (the LSI), and this causes each of the modules to begin to operate and perform processing.

In the following, a program for causing the computer apparatus 300 to camouflage an instruction of a processing target program in order to make analysis or alteration of the program difficult is referred to as a self-modifying process addition program. The self-modifying process addition program is installed on the computer apparatus 300 from an external medium such as a flexible disk, a CD-ROM or a DVD via the external medium read/write device 302 and thus stored in the HD 306. Alternatively, the self-modifying process addition program may also be stored in the HD 306 via the network interface 301.

Self-Modifying Process
In this embodiment, analysis or alteration of a program is made difficult by compiling a source program to generate an assembly program and performing self-modifying with respect to an instruction of the assembly program containing a command code associated with a conditional jump. Here, a conditional jump refers to a command to branch processing in accordance with whether or not a certain condition is satisfied. Moreover, self-modifying refers to modifying of an instruction to be rewritten with another instruction. Preliminary changing of an instruction that should be originally executed to another instruction is referred to as camouflaging.

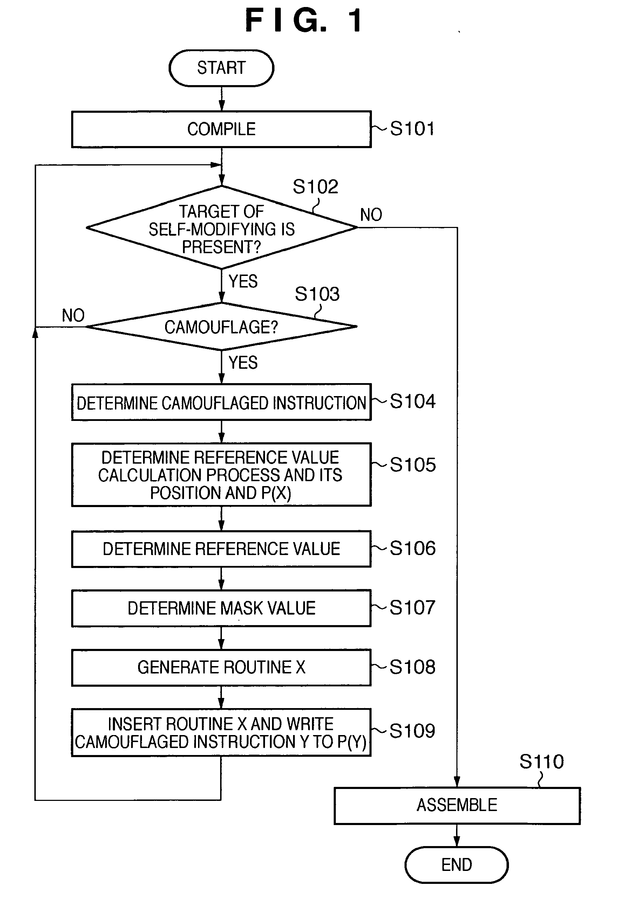

FIG. 1 is a flowchart showing the flow of processing performed by the CPU 303 based on the self-modifying process addition program according to this embodiment. It is assumed that a program to be protected, which is the processing target of the self-modifying process addition program, is recorded in the RAM 305 as, for example, a source program written in C language.

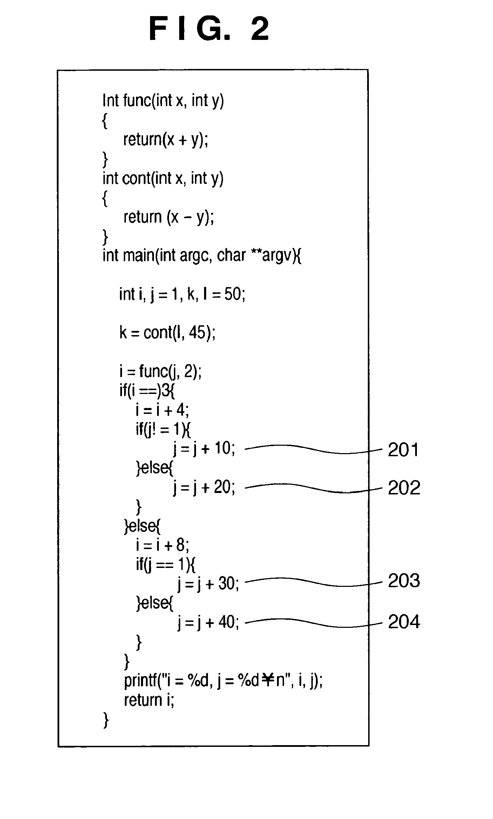

FIG. 2 shows an example of the C source program. In the example of FIG. 2, the value of variable *i* is determined based on the value of *j* and the content of function *func(,),* and one of four processes is performed depending on whether or not variable *i* is 3 and whether or not variable *j* is 1. Specifically, the four processes are as follows:
- If variable *i* is 3 and variable *j* is not 1, variable *j* is incremented by 10 (201).
- If variable *i* is 3 and variable *j* is 1, variable *j* is incremented by 20 (202).
- If variable *i* is not 3 and variable *j* is 1, variable *j* is incremented by 30 (203).
- If variable *i* is not 3 and variable *j* is not 1, variable *j* is incremented by 40 (204).

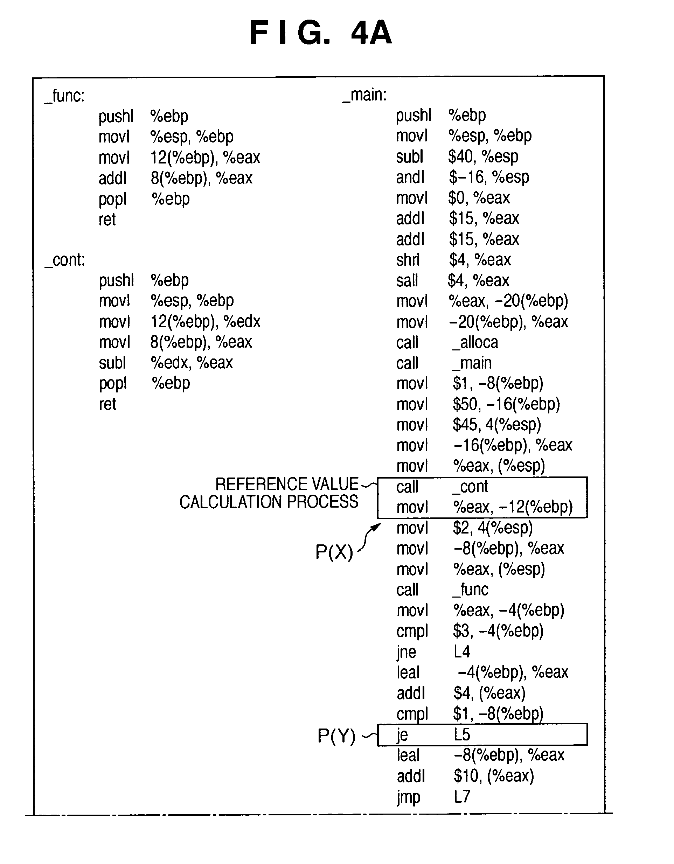

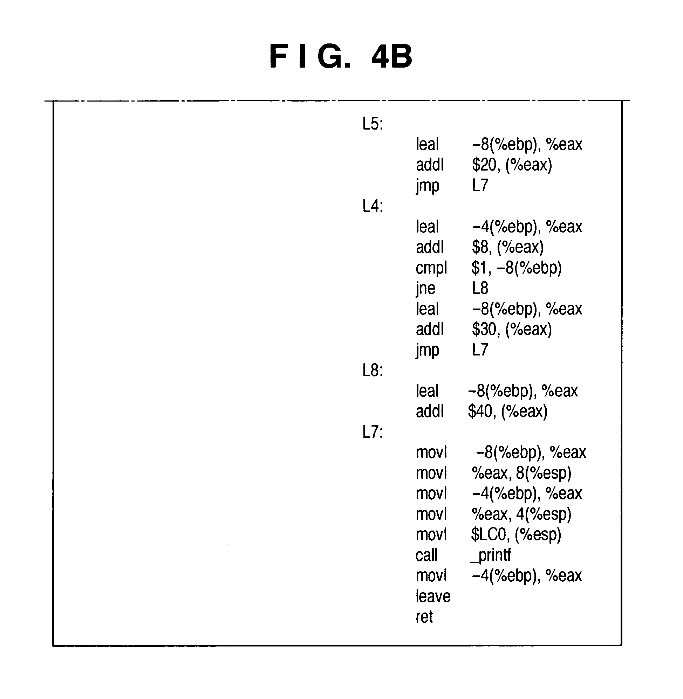

In step S101, the CPU 303 compiles the source program stored in the RAM 305 to generate an assembly program. FIG. 4A and 4B show a part of the assembly program generated by compiling the source program shown in FIG. 2.

In step S102, the CPU 303 determines whether or not an instruction that can be the target of self-modifying is present in the generated assembly program. That is to say, the CPU 303 determines whether or not an instruction that contains a command code associated with a conditional jump and that has not yet been subjected to the processes of steps S103 to S109 is present in the assembly program. Examples of the command code associated with a conditional jump include *je, jz, jnz, jne, jb, jc, jnae, jl, jnge, ja, jnbe, jg, jnle, jbe, jna, jle, jng, jnb, jae, jnc, jge,* and *jnl.* It should be noted that the conditional jump varies among processors both in terms of the instruction and in terms of the command code and is therefore not limited to these examples.

Since the CPU 303 records an instruction that is determined as the target of self-modifying in the RAM 305 as will be described later, the CPU 303, in step S102, performs the determination by referencing the record in the RAM 305. In step S102, if there is a branch command (a command code associated with a conditional jump) that has not been processed, processing proceeds to step S103. If not, processing proceeds to step S110.

In this embodiment, the processes of step S103 and thereafter are performed for each of instructions in the assembly program that contain a command code associated with a conditional jump and that have not been processed.

In step S103, the CPU 303 randomly determines whether or not the processing target instruction is made the target of self-modifying. It should be noted that in this embodiment, a single line of the assembly program corresponds to a single instruction. Accordingly, in step S103, one of the lines of the assembly program that have not been processed is selected as the processing target, and whether or not the instruction on the selected line is to be camouflaged is randomly determined. Here, the position (e.g., the address or the line number) at which camouflaging with a different instruction Y is performed is defined as P(Y).

The position P(Y) at which camouflaging is performed may also be determined in a machine language program that is generated by assembling the assembly program. Specifically, the position P(Y) may also be determined in the following manner. The assembly program is assembled to obtain a machine language program. The machine language program is a sequence of instructions, and the CPU 303 can read the machine language program and recognize the individual instructions and breaks between the instructions. As a result of this recognition, one instruction is determined from the machine language program, and the position of a corresponding instruction in the assembly program can be used as the target position P(Y) of self-modifying.

Here, it is assumed that in FIG. 4A, "je L5" is determined as the target instruction *y* and it is determined that "je L5" is to be camouflaged. The CPU 303 stores which instruction has been determined as the target of self-modifying in the RAM 305.

In this manner, in steps S102 and S103, among the instructions contained in the processing target program, a target instruction to be modified to a camouflaged instruction is determined. In particular, in this embodiment, the target instruction is randomly determined from instructions associated with conditional jumps contained in the processing target program.

Next, in step S104, the CPU 303 determines a camouflaged instruction Y. In this embodiment, an instruction containing a conditional jump that will branch to a condition opposite to that of the original instruction *y* is determined as the camouflaged instruction Y. In other words, an instruction that performs conditional branching different from that by the target instruction *y* is generated as the camouflaged instruction Y. In the example of FIG. 4A and 4B, the target instruction is "je L5". Thus, "jne L5", which is the opposite control flow of "je", is determined as the camouflaged instruction Y. These processes are executed by a functional element serving as a camouflaged instruction generating means, which is realized on the computer apparatus 300.

In steps S105 to S108 described below, a routine X (a restore command) for modifying (restoring) the camouflaged instruction Y with the true instruction *y* is generated. The processes of steps S105 to S108 are executed by a functional element serving as a restore command generating means, which is realized on the computer apparatus 300. Then, in step S109, the routine X is inserted into the processing target assembly program, and the true instruction *y* is modified with the camouflaged instruction Y.

In this embodiment, the routine X is constructed so that the routine X calculates, based on three values below, the position P(Y) at which camouflaging with the camouflaged instruction Y is performed and modifies the instruction in that position P(Y) with the camouflaged instruction Y.
- A predetermined position (hereinafter referred to as the BASE position) in the assembly program.
- A calculated value (hereinafter referred to as the reference value) of a predetermined process (hereinafter referred to as the reference value calculation process) for calculating a fixed value in the assembly program.
- P(Y) - the BASE position - the reference value (hereinafter referred to as the mask value).

The routine X calculates the camouflaging position P(Y) by calculating the reference value + the BASE position + the mask value. Here, in the routine X, the reference value is acquired by referencing a memory storing the processing result of the reference value calculation process in the assembly program. In other words, the routine X references the memory storing an output value of a processing command (the reference value calculation process) contained in the processing target program, identifies the position of the instruction Y in the program based on the referenced value, and restores the true instruction *y*. Thus, it is difficult for an attacker to know the reference value even when the attacker inspects a portion of the assembly program corresponding to the routine X. Therefore, it is difficult to determine which part of the assembly program is camouflaged or is not camouflaged, so that it is difficult for the attacker to analyze the operation of the assembly program or to alter the assembly program so that the program performs desired operation.

It should be noted that in this embodiment, the output value (the reference value) of the reference value calculation process is a fixed value, so that the mask value can be determined easily.

In the following, details of each of the steps will be described. In step S105, the CPU 303 determines the reference value calculation process in the assembly program and its position and P(X). The routine X performs the process of writing the true instruction *y* to P(Y), as described above, and P(X) indicates the position into which the routine X is inserted. P(X) is determined at any point in the control flow from the position of the reference value calculation process to P(Y). FIG. 4A shows an example in which "call _cont" "movl %eax, -12(%ebp)" is determined as the reference value calculation process, "je L5" is determined as the target instruction of self-modifying, and the next line of the reference value calculation process is determined as P(X).

It should be noted that various processes performed in the program can be used as the reference value calculation process. For example, a process of calculating an observed value in the method described in the background art can be used, in which method a program verifies during execution that the program is not altered. In the description of this embodiment, function *cont(,)* in FIG. 2 is used as the reference value calculation process in order to facilitate understanding. However, the reference value calculation process may also be a process that does not exist in the C source program and exists only in the assembly program. It should be noted that the reference value is the processing result of the reference value calculation process, as described above. Moreover, the reference value calculation process is the process of calculating a definite value. That is to say, a fixed value is output as a result of executing the process.

Next, the CPU 303 determines the reference value in step S106, determines the mask value in step S107, and generates the routine X in step S108. The manner in which these steps are performed will be detailed below.

The routine X requires the position P(Y) of the camouflaged instruction Y, which is the target of self-modifying. For this reason, the CPU 303 calculates and determines the mask value from P(Y), a certain position on the program, and the reference value so that the relationship "P(Y) = the certain position on the program + the reference value + the mask value" is satisfied.

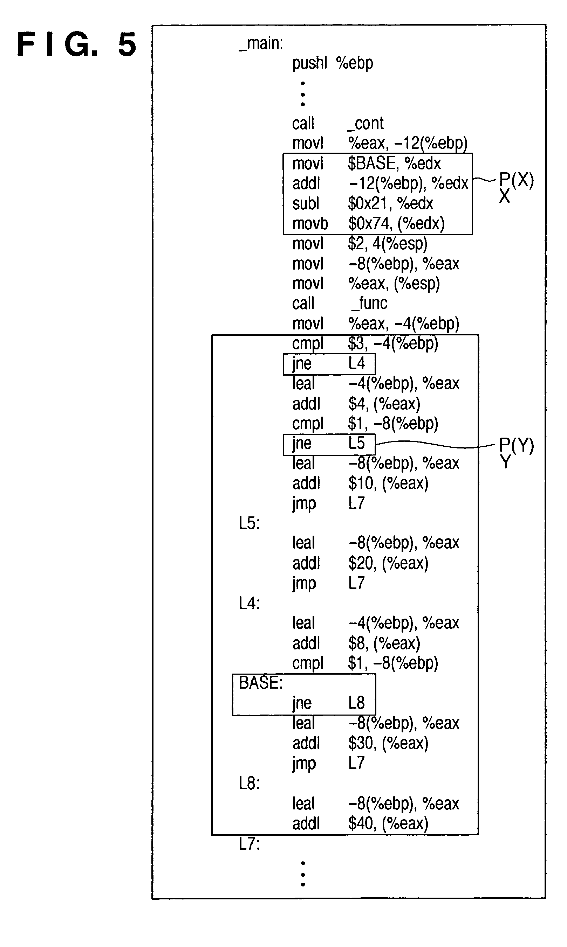

In the example of FIG. 4A, the position P(Y) of the camouflaged instruction Y has been determined as the position of "je L5" in step S103. The reference value calculation process is "call _cont" in FIG. 4A, and the output calculated by "call _cont" is stored in "-12(%ebp)" by the next instruction "movl %eax, -12(%ebp)". As described above, the reference value calculation process "call _cont" corresponds to *cont(,)* in FIG. 2, and the calculated value of *cont(,)* in function *main(,)* is cont(1,45) = cont(50,45) = 50-45 = 5. Thus, the CPU 303 can calculate the calculation result "5" in advance. In the following, a procedure for creating an assembly program shown in FIG. 5, which is the result of adding the self-modifying process, from the assembly program shown in FIG. 4A and 4B will be described.

First, the CPU 303 determines an arbitrary position (the BASE position) in the program. Here, it is assumed that "jne L8" in FIG. 4B is selected. The address of this instruction is referred to as "the address of BASE". In the assembly program, "BASE:" is inserted before "jne L8".

Here, the camouflaged instruction Y, which is the target of self-modifying, is "jne L5". Hereinafter, P(Y) is referred to as "the address of TARGET".

As described above, the relationship "P(Y) = the BASE position (address) + the reference value + the mask value" holds. Thus, "the mask value = P(Y) - the address of BASE - the reference value". When the reference value = 5 as in the above-described example, "the mask value = the address of TARGET - the address of BASE - 5". In the example here, P(Y) has a smaller address than BASE, so that the absolute value of the mask value can be obtained and subtracted from BASE. Accordingly, (the absolute value of) the ultimate mask value is "the address of BASE - the address of TARGET + 5". This calculation can be performed from the assembly program shown in FIG. 4A and 4B (by once obtaining a machine language program thereof and using the instruction sequence of the machine language program as necessary).

Next, with reference to the self-modifying routine X in FIG. 5, a method of generating the processing content of the routine X will be described. Since the purpose of the routine X is to write the true instruction to P(Y), P(Y) is first obtained. The register edx is used for calculation of P(Y) so that other processes will not be affected.

First, the CPU 303 generates "movl $BASE, %edx". This is an instruction that assigns the address of BASE, *$BASE,* to the register *edx.*

Next, the CPU 303 generates "addl - 12(%ebp), %edx". This is an instruction that adds - *12(%ebp)* to the register *edx.* Here, *-12(%ebp)* stores the result of the reference value calculation process, and the value thereof is 5. Thus, the value obtained by adding 5 to the address of BASE is stored in the register *edx.* In FIG. 5, this value indicates the position five bytes below BASE.

Then, the CPU 303 generates "subl $0x21, %edx". This is an instruction that subtracts (the absolute value of) the above-mentioned mask value in order to store P(Y) in the register *edx.* Since the mask value is *$0x21,* 21 in hexadecimal (33 in decimal) is subtracted from the register *edx.* The resultant value indicates the position P(Y) thirty-three bytes above the position five bytes below BASE.

Finally, the CPU 303 generates "movb $0x74, (%edx)". Here, the address *(%edx)* stored in the register edx is P(Y). Accordingly, "movb $0x74, (%edx)" is an instruction that assigns *$0x74* to *(%edx)* in order to modify the camouflaged instruction "jne L5" to the true instruction "je L5". However, since *jne* is *0x75* in machine language, *0x75* of one byte written in P(Y) is modified to *0x74.*

In this manner, the routine X enclosed with a rectangle in the upper portion of FIG. 5 is generated. Such a routine X is an example. For example, another position may also be employed as BASE, and in that case, the mask value becomes a different value. It should be noted that the address calculation of the program is performed in order to calculate P(Y) in FIG. 5.

Next, in step S109, the above-described routine X is inserted into P(X). Here, the above-described routine X is inserted into the position of the next line of the reference value calculation process in FIG. 4A and 4B. Moreover, the false instruction "jne L5" is written to P(Y) as the instruction Y, which is the target of self-modifying. As a result, the assembly program shown in FIG. 4A and 4B is modified to the assembly program shown in FIG. 5.

Next, processing returns to step S102, and the CPU 303 determines whether or not an instruction that can be the target of self-modifying is present, and then, in step S103, the CPU 303 randomly determines whether or not the instruction is to be camouflaged. If the instruction is to be camouflaged, the processes of steps S104 to S109 are repeated, and if the instruction is not to be camouflaged, processing returns to step S102. If there is no instruction to be modified, processing proceeds to step S110.

In step S110, the CPU 303 generates a machine language program by assembling the self-modifying program. When necessary, the CPU 303 generates an executable program by linking machine language programs. Moreover, with respect to the executable program, the CPU 303 performs a process such as a process of setting a flag that permits writing to the code area of the program, thereby enabling the program to write to its own code area during execution.

Operation of Self-Modifying Program
Next, the manner in which the machine language program of the self-modifying program is executed by the CPU 303 will be described. This will be described with reference to FIG. 5 because a machine language program substantially corresponds to an assembly program and it can be considered that there is no difference therebetween in terms of the control flow.

First, instructions in the program are interpreted by the CPU 303 in the order from the top of the machine language program, and a memory and a register are read and written. When the execution point reaches P(X), the routine X is executed. As a result of this processing, the camouflaged instruction Y ("jne L5") located at P(Y) is modified to the true instruction *y* ("je L5"). In the machine language program, *0x75* is modified to *0x74.* Then, the routine X is finished, and the subsequent instructions are interpreted and executed before P(Y) is reached. The instruction at P(Y) has been modified to the true instruction *y*, so that *y* is interpreted and executed.

Security of Self-Modifying Program
Next, the security of the program generated by the self-modifying process addition program according to this embodiment will be described. Consider a case where the program shown in FIG. 5 is analyzed. As described above, a machine language program substantially corresponds to an assembly program, and it can be considered that there is no difference therebetween in terms of the control flow, so that it is assumed that an assembly program corresponding to the program shown in FIG. 5 is obtained by disassembling the machine language.

In FIG. 5, the position P(X) of the routine X and the position P(Y) of the camouflaged instruction Y are arranged close to each other. However, in an actual program, these positions are not necessarily arranged at a short distance from each other. Accordingly, it is difficult to ascertain the relationship between the camouflaging routine X and the target Y of self-modifying by simply looking at the assembly program.

Next, consider a case where the operation of the assembly program is analyzed while reading and understanding the program. The processing content of the routine X is determined by a certain position (the BASE position) on the program, an output value (the reference value) of the reference value calculation process, and the mask value, and it is difficult to obtain the reference value by simply reading and not executing the program.

In the configuration in which a program verifies during execution that the program is not altered, the process of obtaining an observed value that is calculated during execution of the program is implemented in such a manner that the process itself of performing the observation is unlikely to be ascertained easily. Also in this embodiment, the reference value calculation process can be prevented from being easily ascertained by using the above-described implementation manner for the reference value calculation process. Furthermore, since the process of the routine X is constituted by a plurality of instructions, the routine X can also be prevented from being easily ascertained by arranging those instructions at separate positions rather than gathering them in one area. Therefore, it is difficult to determine the value of P(Y).

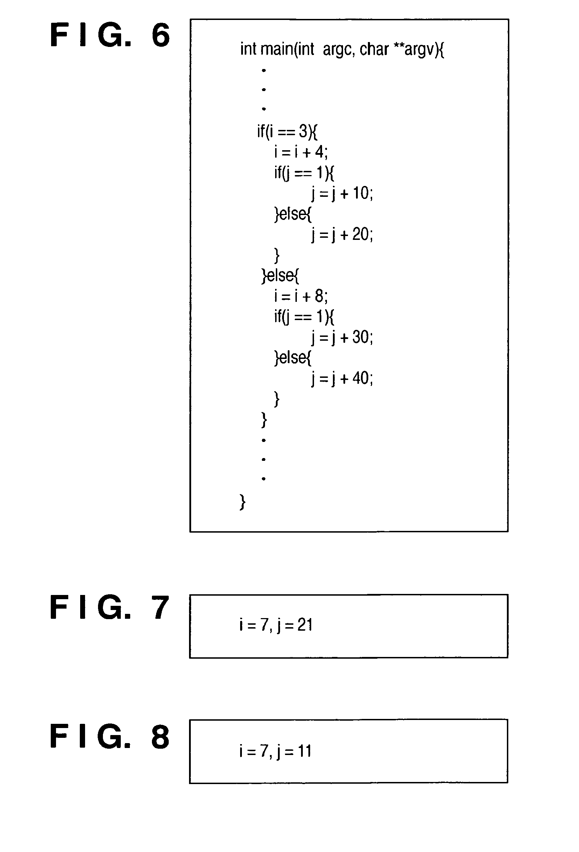

On the other hand, an analyst who knows the method of this embodiment will know that a conditional jump in the program may have been modifying. In the case of FIG. 5, just by looking at the program, it is clear that there are conditional branches in the portion enclosed with a rectangle extending from the middle to the bottom, so that there is the possibility that the analyst can decompile this portion and interpret the program as a source program written in C language as shown in FIG. 6. However, the analyst cannot ascertain which of the conditional jumps has been modified unless the analyst can identify P(Y), so that the analyst cannot uniquely determine what is the true program and is forced to enumerate and examine conceivable possibilities. A comparison between FIGS. 2 and 6 indicates that execution of code shown in FIG. 2 results in an output shown in FIG. 7, whereas execution of code shown in FIG. 6 results in an output shown in FIG. 8. Thus, when the analyst determines that the program shown in FIG. 6 is the true program, it means that the analyst incorrectly analyzes the program. Therefore, the attacker is also unable to alter the program so that the program performs desired operation.

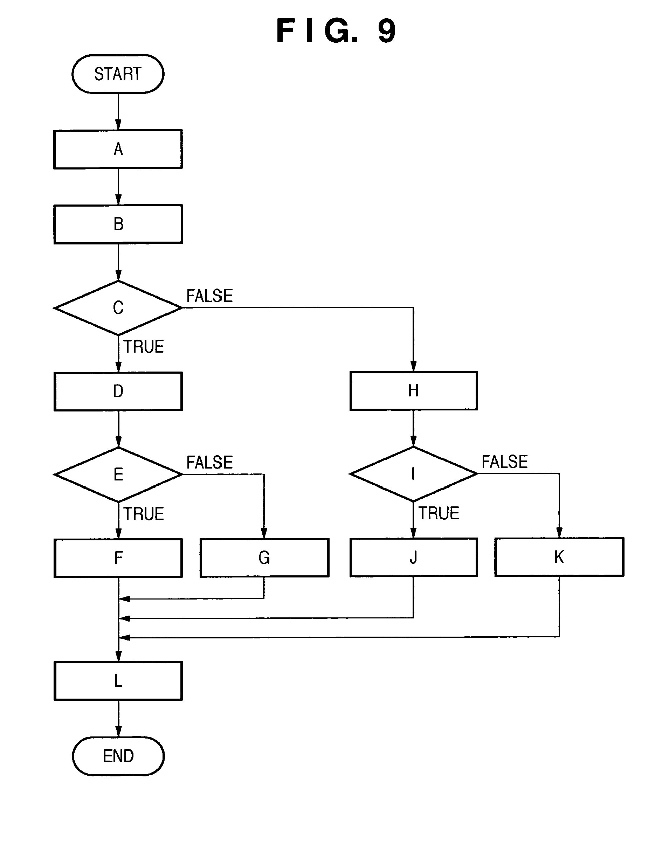

Based on the foregoing consideration, the effects of the configuration according to this embodiment will be further described with reference to a flowchart in FIG. 9. The flowchart in FIG. 9 also corresponds to the program shown in FIG. 2. Branch C in FIG. 9 corresponds to *if(i==3)* in FIG. 2, branch E in FIG. 9 corresponds to *if(j!=1)* in FIG. 2, and branch I in FIG. 9 corresponds to *if(j==1)* in FIG. 2.

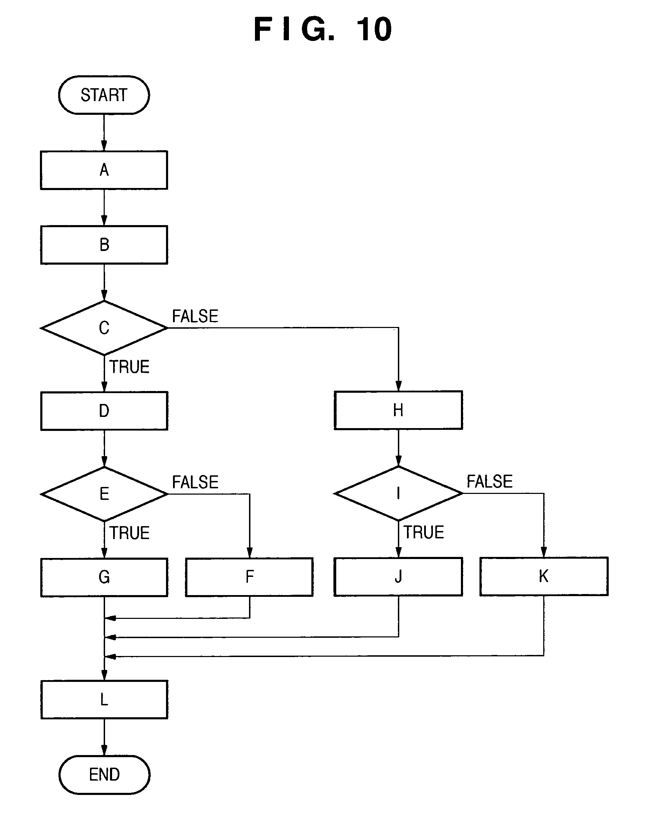

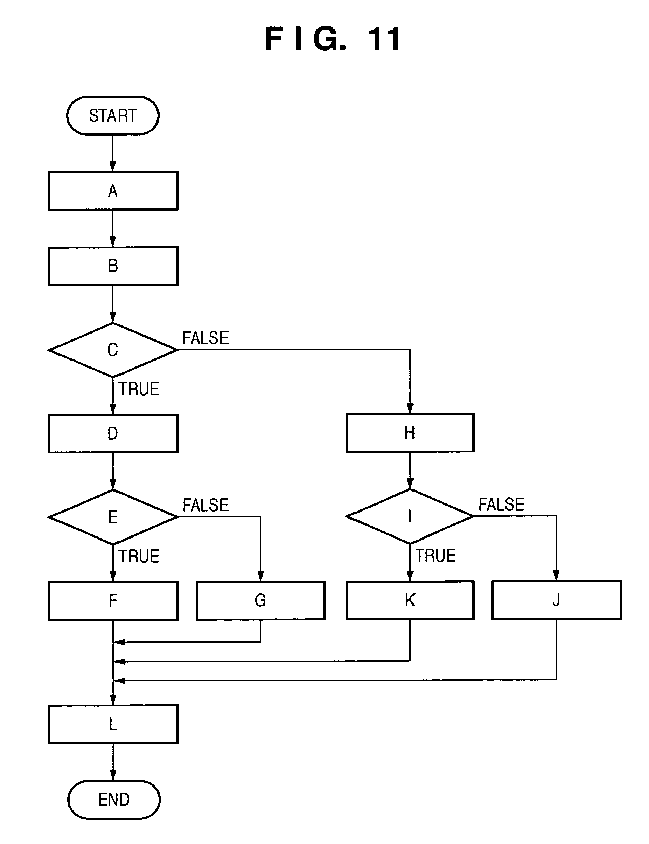

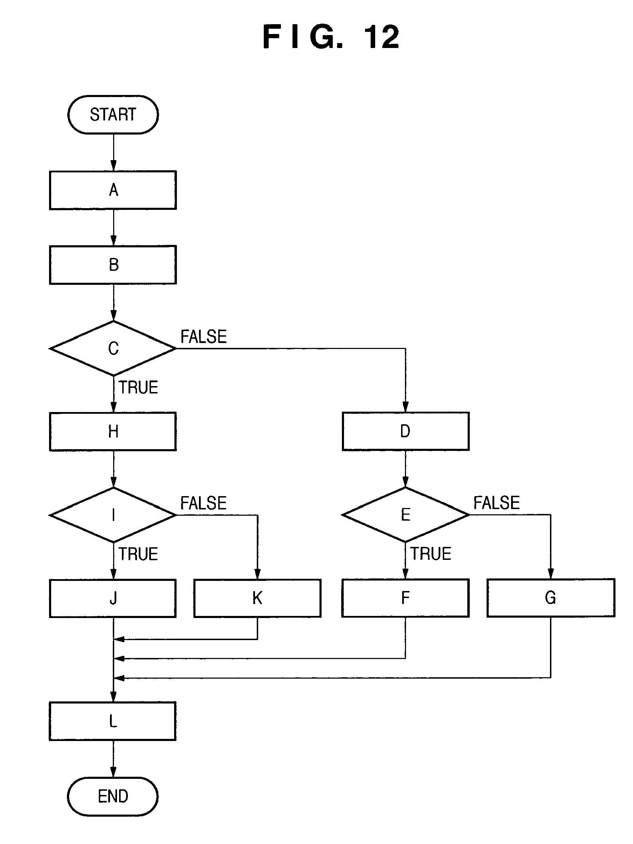

In the case of a program represented by the flowchart in FIG. 9, there are a total of three comparison branches arranged in two stages. Accordingly, there are three conditional jumps in the assembly program. This can be confirmed because there are "jne L4", "je L5", and "jne L8" in FIG. 4A and 4B. When this embodiment is applied to this program, the three conditional jumps are randomly camouflaged. The difficulty of ascertaining which conditional jump is camouflaged makes it necessary to enumerate and analyze conceivable possibilities. When it is assumed that branch E of the flowchart in FIG. 9 is camouflaged, a flowchart in FIG. 10 can be the true flowchart. Similarly, when it is assumed that branch I in FIG. 9 is camouflaged, a flowchart in FIG. 11 can be the true flowchart. Likewise, when it is assumed that branch C in FIG. 9 is camouflaged, a flowchart in FIG. 12 can be the true flowchart.

From the foregoing, when there is one conditional jump to be camouflaged, the number of possible flowcharts increases to two. Accordingly, when there are n conditional jumps, the number of possible flowcharts increases to 2 raised to the n-th power. Consequently, the number of analysis objects is set to be of the order of an exponential function of the number of conditional jumps in the program, so that it can be considered that the configuration of this embodiment provides difficulty of analysis in terms of the computational complexity.

In the conventional configuration in which a true command code of a program is camouflaged using a self-modifying process, there is a problem in that the difficulty of analysis cannot be quantitatively estimated. In contrast, in the configuration of this embodiment, the attacker who analyzes a program while reading and understanding the program is required to analyze the same number of control flows as the number of the order of an exponential function of the number of conditional jumps within the program. Therefore, according to the configuration of this embodiment, the difficulty of analysis can be quantitatively estimated from the number of conditional jumps.

Moreover, in the configuration in which a program verifies during execution that the program is not altered, there is a risk that the observed value comparison process will be found even though the observing process itself is unlikely to be ascertained easily and the comparison process will be invalidated. Furthermore, in the case of a configuration in which a plurality of alteration detection routines are provided, there is a problem in that the effect of the configuration, that is, what degree of strength the program has with respect to what kind of attack when what kind of dependency relationship between the alteration detection routines is constructed, cannot be expressed as a numerical value.

In contrast, in this embodiment, a program verifies during execution that the program is not altered using the result (the reference value) of the reference value calculation process. In other words, the memory storing an output value of a processing command contained in the processing target program is referenced, and the position of the target instruction in the program is identified based on the referenced value.

Thus, the comparison process is realized as an address calculation process, and the program operates in such a manner that when the processing result of the address calculation process is correct, the self-modifying process is a success. Since the address calculation process is constituted by a plurality of instructions when compared to the comparison process, the possibility that the attacker will find the process can be decreased by distributing those instructions, and the security against invalidation can be increased.

Moreover, one comparison process in the conventional alteration self-detection process corresponds to one self-modifying process of this embodiment. When there are *k* comparison processes in the conventional alteration self-detection process, the number of control flows that should be analyzed of a program generated according to this embodiment is 2 raised to the *k*-th power. Accordingly, the attacker who analyzes the program while reading and understanding the program is required to analyze the same number of control flows as the number of the order of an exponential function of the number of comparison processes in the alteration self-detection process. Therefore, according to the configuration of this embodiment, the difficulty of analysis can be quantitatively estimated from the number of comparison processes. Furthermore, the difficulty of analysis can be quantitatively estimated independently of the dependency relationship between alteration detection routines of the alteration self-detection process.

Second Embodiment
In the first embodiment, the routine X is constructed so that the routine X calculates the position P(Y) at which camouflaging with a camouflaged instruction Y is performed based on the three values of the BASE position, the reference value, and the mask value and modifies an instruction in the position P(Y) with the camouflaged instruction Y. In this embodiment, a self-modifying process addition program in the form in which the routine X calculates an operation code or an operand of the camouflaged instruction Y based on the two values of the reference value and the mask value and modifies the instruction *y* with the camouflaged instruction Y will be described. An instruction is constituted by a command (an operation code) and an operand, which is the object of the command, and the operand may be, for example, the content of a register or a memory or a numerical value itself.

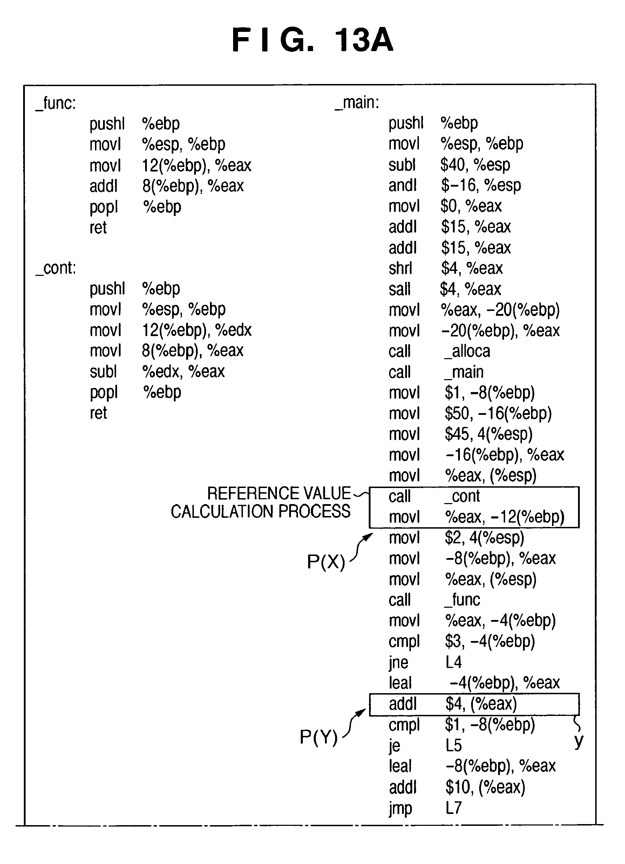

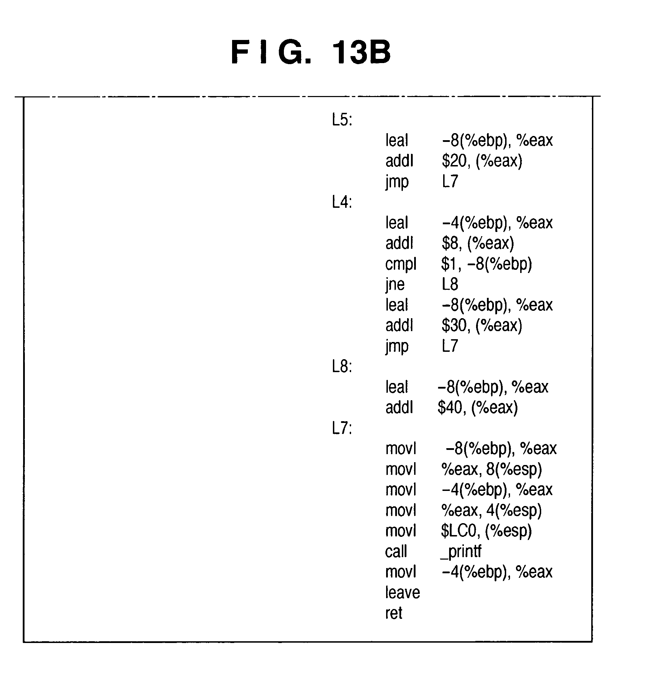

FIG. 13A and 13B show a part of an assembly program generated by compiling the source program shown in FIG. 2. An instruction "addl $0x4,(%eax)" enclosed with a rectangle is found near the bottom of FIG. 13A. This instruction is constituted by a command (an operation code) "addl" and operands "$0x4" and "(%eax)" and means a process of adding a numerical value "4" (in hexadecimal) to the register "eax" as data of 32 bits. Here, "1" of "addl" designates "long", that is, 32 bits. The machine language program of this instruction is "83 00 04" (in hexadecimal), and "addl" and "(%eax)" correspond to "83 00" and "$0x4" corresponds to "04".

In an Intel x86 CPU, the following correspondences hold.

"addl $0x4, (%eax)" in assembly is "83 00 04" (in hexadecimal) in machine language.

"addl $0x4, (%edx)" in assembly is "83 02 04" (in hexadecimal) in machine language.

"subl $0x4, (%eax)" in assembly is "83 28 04" (in hexadecimal) in machine language.

"sub $0x4, (%edx)" in assembly is "83 EA 04" (in hexadecimal) in machine language.

"movb $0x4, (%eax)" in assembly is "C0 00 04" (in hexadecimal) in machine language.

"rolb $0x4, (%eax)" in assembly is "C6 00 04" (in hexadecimal) in machine language.

Thus, when the first byte of the machine language program "83 00 04" (in hexadecimal) corresponding to the above-described instruction "addl $0x4, (%eax)" is modified to "C0", the modified machine language program "C0 00 04" corresponds to the instruction "movb $0x4,(%eax)". Similarly, when the first byte is modified to "C6", the modifying machine language program "C6 00 04" corresponds to the instruction "rolb $0x4,(%eax)". When the second byte "00" is modified to "28", the modified machine language program "83 28 04" corresponds to the instruction "subl $0x4,(%eax)". That is to say, the command (the operation code) can be changed to a different command (operation code) by modifying one byte of the machine language program.

Moreover, when the second byte "00" of the machine language program "83 00 04" corresponding to the above-described instruction "addl $0x4,(%eax)" is modified to "02", the modified machine language program "83 02 04" corresponds to the instruction "addl $0x4,(%edx)". That is to say, the register of the operand can also be changed to a different register by modifying one byte of the machine language program.

Finally, when the third byte "04" of the machine language "83 00 04" corresponding to the above-described instruction "addl $0x4, (%eax)" is modified to "03", the modified machine language program "83 00 03" corresponds to the instruction "addl $0x3,(%edx)".
That is to say, the numerical value of the operand can also be changed to a different numerical value by modifying one byte of the machine language program.

From the foregoing, the routine X can be constructed so that the target to be camouflaged is an operation code or an operand and the routine X calculates the original operation code or operand based on the two values of the reference value and the mask value and modifies an instruction with a camouflaged instruction Y.

The flow of processing executed by the CPU 303 based on the self-modifying process addition program according to this embodiment will be described with reference to FIGS. 1 and 2 as in the first embodiment. It is assumed that a program to be protected, which is the processing target of the self-modifying process addition program, is recorded in the RAM 305 as, for example, a source program written in C language.

In step S101, the CPU 303 compiles the source program stored in the RAM 305 to generate an assembly program. FIG. 13A and 13B show a part of the assembly program generated by compiling the source program shown in FIG. 2.

In step S102, the CPU 303 determines whether or not an instruction that can be the target of self-modifying is present in the generated assembly program by a determining algorithm. Although various types of algorithms from a simple algorithm to a complex algorithm can be used as the determining algorithm, the determining algorithm described here is an algorithm that randomly selects a single line from the generated assembly program.

Since the CPU 303 records an instruction that is determined as the target of self-modifying in the RAM 305 as will be described later, the CPU 303, in step S102, performs the determination by referencing the record in the RAM 305. In step S102, if the determining algorithm determines that there is the target, processing proceeds to step S103. If the determining algorithm determines that there is no target, processing proceeds to step S110. It is assumed that "addl $4, (%eax)" enclosed with a rectangle near the bottom of FIG. 13A is selected as the target instruction *y* and it is determined that there is the target.

In step S103, the CPU 303 randomly determines whether or not the processing target instruction is made the target of self-modifying. It should be noted that in this embodiment, a single line of the assembly program corresponds to a single instruction. Accordingly, in step S103, one of the lines of the assembly program that have not been processed is selected as the processing target, and whether or not the instruction on the selected line is to be camouflaged is randomly determined. It is assumed that it is determined that the target instruction *y* "addl $4, (%eax)" is to be camouflaged. The CPU 303 stores which instruction has been determined as the target of self-modifying in the RAM 305. The position (e.g., the address or the line number) at which camouflaging with a different instruction Y is performed is defined as P(Y).

In this manner, in steps S102 and S103, among the instructions contained in the processing target program, a target instruction to be modified to a camouflaged instruction is determined.

Next, in step S104, the CPU 303 determines the camouflaged instruction Y. In this embodiment, an instruction having, as an operand, a numerical value *$3* different from the numerical value *$4* of the operand of the original instruction *y* "addl $4, (%eax)" is determined as the camouflaged instruction Y. These processes are executed by a functional element serving as a camouflaged instruction generating means, which is realized on the computer apparatus 300.

In steps S105 to S108 described below, a routine X (a restore command) for modifying (restoring) the camouflaged instruction Y with the true instruction *y* is generated. The processes of steps S105 to S108 are executed by a functional element serving as a restore command generating means, which is realized on the computer apparatus 300. Then, in step S109, the routine X is inserted into the processing target assembly program, and the true instruction *y* is modified with the camouflaged instruction Y.

In this embodiment, the routine X is constructed so that the routine X calculates the original operand based on two values below and modifies the instruction in the position P(Y) with the camouflaged instruction Y in order to modifies the camouflaged operand of the camouflaged instruction Y back to the original operand.
- A calculated value (hereinafter referred to as the reference value) of a predetermined process (hereinafter referred to as the reference value calculation process) for calculating a fixed value in the assembly program.
- The machine language of the original operand XOR the reference value (hereinafter referred to as the mask value).

The routine X calculates the original operand by calculating "the reference value XOR the mask value". Here, in the routine X, the reference value is acquired by referencing a memory storing the processing result of the reference value calculation process in the assembly program. In other words, the routine X references the memory storing an output value of a processing command (the reference value calculation process) contained in the processing target program, identifies the operand of the instruction *y* based on the referenced value, and restores the true instruction *y*. Thus, it is difficult for the attacker to know the reference value even when the attacker inspects a portion of the assembly program corresponding to the routine X. Therefore, it is difficult to determine the original operand of the assembly program, so that it is difficult for the attacker to analyze the operation of the assembly program or to alter the assembly program so that the program performs desired operation.

It should be noted that in this embodiment, the output value (the reference value) of the reference value calculation process is a fixed value, so that the mask value can be determined easily.

In the following, details of each of the steps will be described. In step S105, the CPU 303 determines the reference value calculation process in the assembly program and its position and P(X). The routine X performs the process of writing the true instruction *y* to P(Y), as described above, and P(X) indicates the position into which the routine X is inserted. P(X) is determined at any point in the control flow from the position of the reference value calculation process to P(Y). FIG. 13A shows an example in which "call _cont" "movl %eax, -12(%ebp)" is determined as the reference value calculation process, "addl $4, (%eax)" is determined as the target instruction of self-modifying, "$4" is determined as the target operand, and the next line of the reference value calculation process is determined as P(X).

It should be noted that various processes performed in the program can be used as the reference value calculation process. For example, a process of calculating an observed value in the method described in the background art can be used, in which method a program verifies during execution that the program is not altered. In the description of this embodiment, function *cont(,)* in FIG. 2 is used as the reference value calculation process in order to facilitate understanding. However, the reference value calculation process may also be a process that does not exist in the C source program and exists only in the assembly program. It should be noted that the reference value is the processing result of the reference value calculation process, as described above. Moreover, the reference value calculation process is the process of calculating a definite value. That is to say, a fixed value is output as a result of executing the process.

Next, the CPU 303 determines the reference value in step S106, determines the mask value in step S107, and generates the routine X in step S108. The manner in which these steps are performed will be detailed below.

The routine X requires the original operand of the camouflaged instruction Y, which is the target of self-modifying. For this reason, the CPU 303 calculates and determines the mask value from the machine language of the original operand and the reference value so that the relationship "the mask value = the machine language of the original operand XOR the reference value" is satisfied.

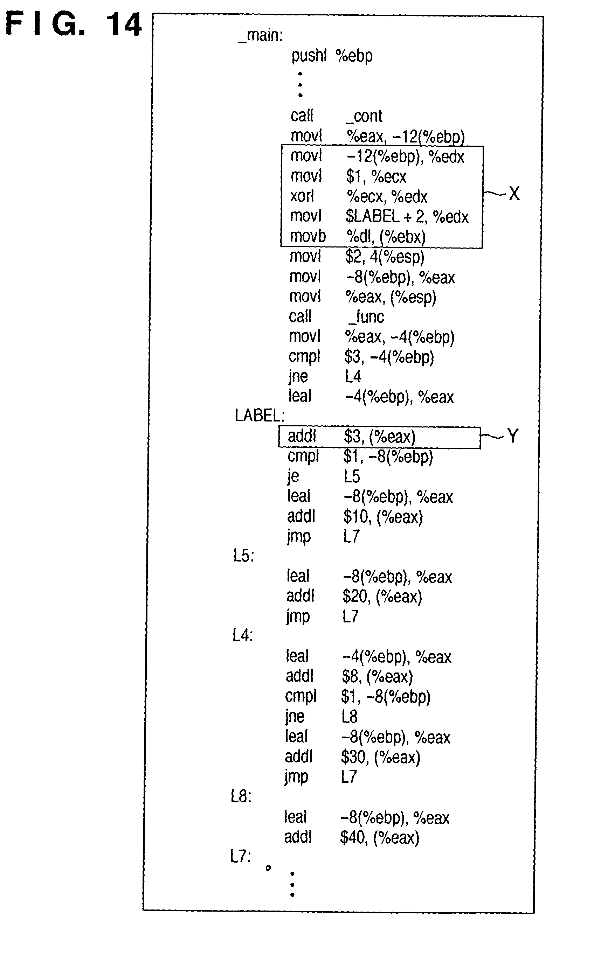

In the example of FIG. 4A and 4B, the position P(Y) of the camouflaged instruction Y has been determined as the position of "addl $4, (%eax)" in step S103. The reference value calculation process is "call _cont" in FIG. 4A, and the output calculated by "call _cont" is stored in "-12(%ebp)" by the next instruction "movl %eax, -12(%ebp)". As described above, the reference value calculation process "call _cont" corresponds to *cont(,)* in FIG. 2, and the calculated value of *cont(,)* in function *main(,)* is cont(1,45) = cont(50,45) = 50-45 = 5. Thus, the CPU 303 can calculate the calculation result "5" in advance. In the following, a procedure for creating an assembly program shown in FIG. 14, which is the result of adding the self-modifying process, from the assembly program shown in FIG. 13A and 13B will be described.

First, the CPU 303 determines the position (the LABEL position) of the target of self-modifying in the program. Here, it is assumed that the position of "addl $4, (%eax)" in FIG. 13A is selected. The address of this instruction is referred to as "the address of LABEL". In the assembly program, "LABEL:" is inserted before "addl $4, (%eax)". It should be noted that as in the first embodiment, the position of the target of self-modifying can also be indirectly obtained by selecting another position instead of directly selecting the position of the target of self-modifying, and performing calculation based on the thus selected position.

Here, the camouflaged instruction Y, which is the target of self-modifying, is "addl $4, (%eax)". Hereinafter, P(Y) is referred to as "the address of TARGET".

As described above, the relationship "the machine language of the original operand = the reference value XOR the mask value" holds. Thus, "the mask value = the machine language of the original operand XOR the reference value". When the reference value = 5 as in the above-described example, "the mask value = the machine language of the original operand XOR 5". Accordingly, the mask value is "4 XOR 5" = "100 XOR 101" (in binary) = 1 (in binary).

Next, with reference to the self-modifying routine X in FIG. 14, a method of generating the processing content of the routine X will be described. Since the purpose of the routine X is to write the original operand to the operand of the instruction in P(Y), the original operand is first obtained. The register edx is used for calculation thereof so that other processes will not be affected.

First, the CPU 303 generates "movl - 12(%ebp), %edx". This is an instruction that stores - *12(%ebp)* in the register edx. Here, *-12(%ebp)* stores the result of the reference value calculation process, and the value thereof is 5. Thus, the value 5 is stored in the register edx.

Then, the CPU 303 generates "movl $1, %ecx". This is an instruction that stores the value 1 in the register ecx.

Then, the CPU 303 generates
"xorl %ecx, %edx". This is an instruction that calculates the XOR between the value of the register edx and the value of the register ecx and stores the result in *edx.* The registers ecx and edx are of 32 bits, and the value 4, which is the result of XORing the value 5 and the value 1, is stored in the register edx. In the case of an Intel x86 CPU, "04 00 00 00 00 00 00 00" in hexadecimal is stored in edx.

Next, the CPU 303 generates "movl $LABEL+2, %ebx". This is an instruction that assigns the address, *$LABEL+2,* two bytes beyond the address of LABEL, *$LABEL,* to the register *ebx.* The original instruction *y* "addl $4, (%eax)" is "83 00 04" in machine language. Accordingly, *$LABEL+2* represents the address in which the machine language "04" is located, and the register *ebx* stores that address.

Finally, the CPU 303 generates "movb $dl, (%ebx)". Here, the address *(%ebx)* stored in the register *ebx* is *$LABEL+2.* Accordingly, "movb $dl, (%ebx)" is an instruction that writes 4 to *(%ebx)* in order to modifying the camouflaged instruction Y to the true instruction "addl $4, (%eax)". However, *%dl* is a high-order byte of *%edx* and is therefore "04", which is a high-order byte of "04 00 00 00 00 00 00 00" in hexadecimal. Thus, the machine language "04" is written to *$LABEL+2.*

In this manner, the routine X enclosed with a solid line rectangle in the upper portion of FIG. 5 is generated. Such a routine X is just an example. For example, another position may also be employed as LABEL as described above, and addition, subtraction, shift operation, and logical operation can also be used as the operation for determining the mask value instead of XOR.

Next, in step S109, the above-described routine X is inserted into P(X). Here, the above-described routine X is inserted into the position of the next line of the reference value calculation process in FIG. 13A and 13B. Moreover, a false instruction is generated as the instruction Y, which is the target of self-modifying. In this embodiment, it is assumed that the operand $4 of "addl $4, (%eax)" is camouflaged to *$3*, and "addl $3, (%eax)" is written to P(Y). As a result, the assembly program shown in FIG. 13A ad 13B is modified to the assembly program shown in FIG. 14.

Next, processing returns to step S102, and the CPU 303 determines whether or not an instruction that can be the target of self-modifying is present, and then, in step S103, the CPU 303 randomly determines whether or not the instruction is to be camouflaged.
If the instruction is to be camouflaged, the processes of steps S104 to S109 are repeated, and if the instruction is not to be camouflaged, processing returns to step S102. If there is no instruction to be modified, processing proceeds to step S110.

In step S110, the CPU 303 generates a machine language program by assembling the self-modifying program. When necessary, the CPU 303 generates an executable program by linking machine language programs. Moreover, with respect to the executable program, the CPU 303 performs a process such as a process of setting a flag that permits writing to the code area of the program, thereby enabling the program to write to its own code area during execution.

The camouflaged instruction Y should be an instruction that is returned to the original instruction *y* by self-modified thereof. Accordingly, when self-modifying is performed with respect to one byte, it is necessary that the difference between the original instruction and the camouflaged instruction is within one byte. In the case of an Intel x86 CPU, modifying can be performed in units of one byte, two bytes, or four bytes. Therefore, as long as the maximum difference between the original instruction and the camouflaged instruction is within four bytes, the camouflaged instruction can be returned to the original instruction in a single self-modifying operation.

Third Embodiment
The first embodiment and the second embodiment can be combined. In the first embodiment, the assembly program shown in FIG. 5 is generated. The self-modifying process addition program described in the second embodiment is applied to this assembly program. At this time, it is assumed that, for example, "subl $0x21, %edx" on the third line of X in FIG. 5 or "movb $0x74, (%edx)" on the fourth line is selected as the target instruction of self-modifying and it is determined that this instruction is to be camouflaged. It is clear that a self-modifying program thus generated is more difficult to analyze or alter.

Furthermore, a configuration in which the same instruction is subjected to self-modifying more than once is also possible. In an example of this configuration, self-modifying of a command (an operation code) is performed in the first round of self-modifying, self-modifying of one of operands is performed in the second round of self-modifying, and self-modifying of another operand is performed in the third round of self-modifying.

Other Embodiments
It goes without saying that the object of the present invention can also be achieved by executing program code of software that realizes the functions of the above-described embodiments on a system or an apparatus. In this case, the program code itself realizes the functions of the above-described embodiments, and that program code is included in the technical scope of the present invention.

The program code can be, for example, recorded on a computer-readable storage medium and supplied to the system or the apparatus. The object of the present invention can also be achieved by a computer (or a CPU or an MPU) of the system or the apparatus by reading and executing the program code stored in the storage medium. Therefore, the storage medium storing that program code also is included in the technical scope of the present invention.

Examples of the storage medium that can be used to supply the program code include a flexible disk, a hard disk, an optical disk, a magneto-optical disk, a CD-ROM, a CD-R, a magnetic tape, a nonvolatile memory card, a ROM, a DVD, and the like.

It should be noted that the program code is not limited to those provided with all the elements required by the computer to realize the functions of the above-described embodiments by reading and executing the program code. That is to say, the program code also includes program code that achieves the object by cooperating with at least either of software and hardware incorporated in the computer.

For example, even in the case where an OS
or the like running on the computer performs a part or all of the actual processing based on a direction from program code, and the functions of the above-described embodiments are realized by this processing, that program code is included in the technical scope of the present invention. It should be noted that OS is short for Operating System.

Alternatively, for example, there is a case where a CPU or the like included in a function expansion board or a function expansion means inserted into or connected to the computer performs a part or all of the actual processing based on a direction from program code, and the functions of the above-described embodiments are realized by this processing. Even in such a case, that program code is included in the technical scope of the present invention. It should be noted that the function expansion board or the function expansion means can perform such processing by reading the program code into a memory thereof and executing the program code.

As described above, according to the configuration of the present embodiments, a routine that determines the address of a target instruction of self-modifying based on the value that is obtained during execution of a program to be protected is generated. Then, the target instruction is modified to a camouflaged instruction, and this routine is inserted into a position at which the routine is executed before execution of the target instruction, whereby a self-modifying process is added to the program to be protected. When the program to be protected to which the self-modifying process has been added is executed, the address of the target instruction is obtained and self-modifying is performed as a result of execution of the above-described routine. Thus, the camouflaged instruction is returned to the true instruction, and the process as intended is performed.

In order to analyze the program, it is necessary to know which instruction is camouflaged and is modified by self-modifying. However, the value that is obtained during execution of the program to be protected is undefined for the attacker who attempts to read and understand the program, so that the attacker cannot determine the camouflaged instruction. Therefore, analysis and alteration of the program to be protected can be made difficult.

Moreover, an instruction containing a conditional jump is camouflaged as an instruction that performs a process opposite to that of the original instruction, and the camouflaged instruction is returned to the original instruction during execution. Thus, the number of control flows that the attacker should analyze is an exponential function of the number of conditional jumps. Therefore, the difficulty of analysis of the program to be protected can be expressed as a numerical value.

According to the present invention, a technique that is capable of making analysis or alteration of a program even more difficult can be provided.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An information processing apparatus (300) comprising:
determining means (S102) configured to determine a target instruction to be modified to a camouflaged instruction among instructions contained in a processing target program,
camouflaged instruction generating means (S104) configured to generate the camouflaged instruction corresponding to the target instruction,
restore command generating means (S108) configured to generate a restore command for restoring the generated camouflaged instruction to the corresponding target instruction, and
means (S109) configured to modify the target instruction contained in the processing target program with the generated camouflaged instruction and add the restore command to the program,
wherein the restore command performs the restoration by referencing a memory storing an output value of a processing command contained in the processing target program and identifying the position of the target instruction in the program or the target instruction based on the referenced value.

2. The information processing apparatus according to claim 1, wherein the restore command references a memory storing a calculated value of a processing command to calculate a fixed value in the processing target program and identifies the position of the target instruction or the target instruction based on the referenced value.

3. The information processing apparatus according to claim 2, wherein the determining means randomly determines the target instruction from instructions associated with conditional jumps contained in the processing target program.

4. The information processing apparatus according to claim 3, wherein the camouflaged instruction generating means generates an instruction that performs conditional branching different from that by the target instruction as the camouflaged instruction.

5. A program for causing a computer to execute modifying of a processing target program,
wherein the program causes the computer to function as:
determining means (S102) configured to determine a target instruction to be modified to a camouflaged instruction among instructions contained in the processing target program,
camouflaged instruction generating means (S104) configured to generate the camouflaged instruction corresponding to the target instruction,
restore command generating means (S108) configured to generate a restore command for restoring the generated camouflaged instruction to the corresponding target instruction, and
means (S109) configured to modify the target instruction contained in the processing target program with the generated camouflaged instruction and add the restore command to the program,
wherein the restore command performs the restoration by referencing a memory storing an output value of a processing command contained in the processing target program and identifying the position of the target instruction in the program or the target instruction based on the referenced value.

6. The program according to claim 5, wherein the restore command references a memory storing a calculated value of a processing command to calculate a fixed value in the processing target program and identifies the position of the target instruction or the target instruction based on the referenced value.

7. The program according to claim 6, wherein the determining means randomly determines the target instruction from instructions associated with conditional jumps contained in the processing target program.

8. The program according to claim 7, wherein the camouflaged instruction generating means generates an instruction that performs conditional branching different from that by the target instruction as the camouflaged instruction.

9. An information processing method comprising the steps of:
determining (S102) a target instruction to be modified to a camouflaged instruction among instructions contained in a processing target program,
generating (S104) the camouflaged instruction corresponding to the target instruction,
generating (S108) a restore command for restoring the generated camouflaged instruction to the corresponding target instruction, and
modifying (S109) the target instruction contained in the processing target program with the generated camouflaged instruction and adding the restore command to the program,
wherein the restore command performs the restoration by referencing a memory storing an output value of a processing command contained in the processing target program and identifying the position of the target instruction in the program or the target instruction based on the referenced value.

10. A computer-readable storage medium in which the program according to claim 5 is stored.
